# EUROPEAN PATENT SPECIFICATION

(11) **EP 3 095 300 B1**
(45) Date of publication and mention of the grant of the patent: **23.03.2022**
(21) Application number: 15700140.5
(22) Date of filing: 12.01.2015
(51) Int. Cl.: H05B 45/327, H05B 45/12

(54) **LED MODULE AND METHOD FOR OPERATING A LED MODULE**
LED MODUL UND VERFAHREN ZUM BETRIEBEN EINES LED MODULS
MODULE À LED ET PROCÉDÉ DE FONCTIONNEMENT D'UN MODULE À LED

(30) Priority: 13.01.2014 DE 102014200436
(43) Date of publication of application: 23.11.2016
(60) Divisional application: 22155773.9
(73) Proprietor: Tridonic GmbH & Co. KG, 6850 Dornbirn (AT)
(72) Inventor: BAKK, Istvan, H-2045 Törökbalint (HU)
(74) Representative: Rupp, Christian
(86) International application number: PCT/EP2015/050391
(87) International publication number: WO 2015/104408

(56) References cited:
- WO-A1-2007/121574
- WO-A1-2013/164670
- DE-A1-102005 042 082
- DE-U1- 20 220 900
- US-A- 4 233 545
- US-A1- 2010 182 294
- US-A1- 2011 068 699
- US-A1- 2012 319 592
- US-A1- 2013 009 551
- US-A1- 2013 088 155

## Description

The present invention relates to an LED module operable based on light sensing, e.g. ambient light sensing. Further, the present invention relates to a method for operating such an LED module. In particular, the present invention presents an LED module, which is configured to automatically dim its light output based on the sensed (e.g. ambient) light.

For increasing the efficiency of a lighting system, dimming based on sensed ambient light is known. It is typically desired that at higher ambient light levels, the lighting system is dimmed to a lower light output, whereas at lower ambient light levels, the lighting system is dimmed to a higher light output. To this end, the amount of ambient light in the surroundings of the lighting system has to be sensed.

The state of the art proposes only lighting systems, which may be dimmed as a whole based on an ambient light level. To this end, the state of the art proposes installing sensing means for the ambient light level at dedicated locations in a room, in which the lighting system is installed. WO 2013/164670 discloses a LED Module comprising a control unit, at least one sensing LED for sensing ambient light and at least one emitting LED for emitting light.

US 2013/088155 discloses a sensing LED comprising a blue LED covered with phosphor material.

However, ambient light levels in a room are not uniform in time and distance. For example, different ambient light levels may exist in a room at different distances from a window or another illumination source. Therefore, different illumination sources of a lighting system, for instance different LED modules, should individually be dimmed to different light output, which is currently not envisaged for the state of the art lighting systems.

The state of the art does particularly not describe light sensors installed on each LED module of a lighting system. This is largely due to the fact that a problem thereby is that the positioning of a light sensor close to the LEDs of the LED module may falsify the measurement of the ambient light level. Suitable sensors for compensating the light output from the LEDs of the LED module are currently too complex and expensive. Although it is known that LEDs may be also used as light sensors, it is not known from the state of the art to use light sensing LEDs for the purpose of dimming an LED module.

In view of the above disadvantages and problems, the present invention aims to improve the state of the art. In particular, the object of the present invention is to increase the efficiency of a lighting system by utilizing (natural and/or artificial) ambient light sensing on a LED module. In other words, the present invention intends to provide an LED module, which is sensitive to the local ambient light. Therefore, the LED module needs to be provided with a simple ambient light sensor, which is sensitive to light sources other than the LEDs on the LED module itself. Interferences of the ambient light sensor on the LED module and the light output from the LEDs should be avoided for reasons of system stability.

"Ambient" light is to be understood as artificial and/or natural light originating form a light source other than the LED module with the sensing LED itself.

"Neighbouring light source" is a light source arranged relatively to the LED module of the invention such that the LED module is able to sense light from this light source.

The object of the present invention is solved by the solution provided in the independent claims. Advantageous implementations of the present invention are further described in the dependent claims. In particular, the present invention may utilize blue LEDs having their main emission peak preferably in the range of 410-460nm, more preferably in the range of 430-460nm, in particular white light emitting LEDs comprising a blue LEDs and one or more color conversion material(s), in order to implement ambient light sensing.

The present invention relates especially to a LED module for operating based on (natural or artificial) ambient light sensing, comprising a control unit for driving at least one LED, at least one emitting LED for emitting light, and at least one sensing LED for sensing light and transmitting/providing a sensed signal corresponding to the intensity of ambient light, to the control unit, wherein the control unit is configured to control the light output of the at least one emitting LED based on the sensed signal obtained by the at least one sensing LED.

By using at least one LED on the LED module as a sensing LED, and by using the sensed light to control the light output of at least one emitting LED, the LED module automatically dims/regulates the light output to the locally measured ambient light level. A lighting system may be provided with plurality of such LED modules, each of which dims/regulates the light output based on the correctly measured ambient light level. Such a lighting system operates with an improved efficiency and enhanced supports energy-saving than lighting systems known from the state of the art.

The at least one sensing LED is a blue LED, namely a white light emitting LED comprising of a blue LED and at least one color conversion material(s).

It has been found that a blue LED may function as a suitable sensor for sensing the ambient light level locally on the LED module, since it is only influenced very weakly by the light output from the at least one emitting LED, in particular if the at least one emitting LED is a typical white-emitting LED. This is due to the fact that the absorption spectrum of a blue LED does not interfere with the emission spectrum of a typical white LED, but is sensitive to ambient light (and/or sunlight). In particular, a blue LED operated as photodiode is selective to the lower wavelengths range (e.g. below 450nm) than the one, where a white LED emits light with a relatively high intensity (e.g. emits light with more than 10% of its highest intensity of emission). Said lower wavelength range is, however, comprised in the spectrum of the sun, or of incandescent lamps, halogen lamps, HID lamps, and fluorescent lamps or in general in an ambient light spectrum, where some/all of the spectra listed light sources are summarized as an ambient light spectrum.

The layer or coating of the blue LED with color conversion material, for instance a phosphor coating, enhances the above-described selective function of a blue LED, and thus further improves the efficiency and accuracy of the at least one sensing LED.

The at least one sensing LED is covered with a color conversion material, which is selected from a group of garnets, comprising a Ce3+ and/or Tb3+ doped YAG or a LuAG phosphor. In an embodiment not covered by the claimed invention, the color conversion material may be selected from the group of e.g. ortho-silicates such as B.O.S.E. (e.g. (Ba,Sr)₂SiO₄:Eu²⁺) phosphors, or nitrides e.g. CaAlSiN3:Eu.

The absorption (and/or excitation) spectra of these color conversion materials are rel. narrow and match the blue emission spectra of a typical white LED (comprising a blue LED and a color conversion material). Thus, the blue spectrum range of the ambient light (comprising at least the sunlight and a white LED light source) reaching the at least one sensing LED is further reduced through its absorbtion and conversion into longer wavelength ranges by the phosphor (color conversion material) applied in the sensing white light emitting LED. Basically, the sensing function is still realized by the blue LED die under the phosphor conversion, but the blue range of the spectrum of the ambient light is significantly decreased (almost eliminated) by the applied phosphor layer of the white LED arrangement. However, lower wavelengths (e.g. UV) could passing through the color conversion material and reach the sensing blue LED. The garnet color conversion materials were found to be to providing excellent results, especially YAG (Yttrium Aluminum Garnet, Y₃Al₅O₁₂: Ce³⁺(, Tb³⁺)) and LuAG (Lutetium Aluminum Garnet: Lu₃Al₅O₁₂:Ce³⁺) provide the best filtering function for ambient light sensing purposes.

Less than 20%, preferably less than 10%, more preferably less than 5% of the sensed signal is originated from light output of the at least one light emitting LED.

The LED module can therefore be dimmed very precisely depending on the ambient light level measured/sensed locally at the LED module. Therefore, the efficiency of the LED module, and thus of a lighting system including at least one LED module can be increased.

Advantageously, the at least one emitting LED and the at least one sensing LED comprise a light emitting layer comprising the same semiconductor structure and/or compound. Additionally, said LEDs could be covered by a common layer of color conversion material. In case of a common color conversion layer the optical interface of the emission and sensing light is the same, which supports greatly the précised functioning of the dimming feature/self adjusting feature of the lighting system.

Applying the above mentioned features, namely the preferred semiconductor properties and the common phosphor layer manufacturing steps the LED module could be significantly simplified and reduced. Furthermore, the LED module operates more precisely, since deviations between the individual LEDs are reduced.

The at least one emitting LED and/or sensing LED may be a SMD device or a LED die. In case of an SMD device, at least for the at least one sensing LED, a typically applied parallelly connected Zener diode should be disconnected (or an LED package/SMD device without a Zener diode should be applied), because it may interfere with the light sensing capabilities of the semiconductor of the at least one sensing LED.

Advantageously, at least one emitting LED and at least one sensing LED are covered by a common globe top comprising a color conversion material.

The globe top can furthermore be used to diffuse the light, direct the light or shape the light emission pattern of the at least one emitting LED. The globe top may also provide a pre-filter for the at least one sensing LED for filtering out the avoided (disadvantageous) wavelength range(s). The globe top may also function as a diffuser for ambient light, in case of e.g. direct sunlight. The globe top may also direct ambient light to the at least one sensing LED.

Advantageously, the control unit is configured to turn off the at least one emitting LED while obtaining the sensing signal from the at least one sensing LED.

Thereby, it can be ensured that the light emitted from the at least one emitting LED does not influence the sensing by the at least one sensing LED, and does not contribute to the sensing signal used for controlling the light output.

Advantageously, the control unit is configured to control the light output/emission of the at least one emitting LED with a pulse width modulation, PWM, signal, and to obtain or evaluate the sensing signal from the at least one sensing LED only in an off-period of the PWM signal. (The term "PWM modulation" is used for one example of a pulsed operation of the LEDs, such that PWM in the above context has to be seen as also referring to other pulsed modulations, such as for example frequency modulation or pulse/pause modulation.)

The PWM technique provides an easy way for on the one hand side implementing dimming of the light, i.e. the control of the intensity of the emitted light by the at least one emitting LED by changing the pulse width or amplitude of the PWM signal, and on the other hand obtaining a noiseless and undisturbed sensing signal.

Advantageously, the off-period of the at least one emitting LED is less than 100 ms, preferably less than 50 ms, more preferably less than 25 ms, while obtaining the sensing signal from the at least one sensing LED.

The sensing period may require only 1 µs. However, it is preferred to repeat the sensing procedure, for example, every 50 ms. Alternatively, a longer sensing period, for instance a sensing period integrating over the whole off-period of a PWM signal, may also increase the accuracy of the ambient light sensing.

Advantageously, the LED module further comprises discharge means to discharge the at least one sensing LED at the beginning of the off-period before obtaining the sensing signal.

Due to the discharging, each new measurement of the ambient light level is accurate, since it is not influenced by remaining charges from prior measurements. This is in particular of advantage, when multiple measurements of the ambient light level are taken in short intervals, as for example the case, when the above-described PWM signal is used.

The LED module further comprises shading means for shading the at least one sensing LED from the at least one emitting LED.

The shading means can further reduce the interference between the at least one emitting LED and the at least one sensing LED.

The LED module comprises at least two LEDs, wherein at least one LED is the at least one emitting LED and at least one other LED is the at least one sensing LED.

Preferably, in this case at least one LED is only used for sensing, and is never operated to emit light, and at least one LED is only used to emit light.

Alternatively, in an embodiment not covered by the claimed invention, the LED module comprises at least one LED operable to emit and sense light, the at least one LED being both the at least one emitting LED and the at least one sensing LED, wherein the control unit is configured to drive the at least one LED, in order to emit light in a first time period and sense light in a second time period.

For instance, the LED module can have only one LED, preferably a white-emitting LED, which is operated to emit light in the first time period, and is operated to sense light in the second time period. This means, the ambient light level measured in the second time period is used to control the light output in the first time period.

Multiple of such LEDs can be combined to form the LED module.

Advantageously, the control unit is configured to drive the at least one LED for emitting and sensing light with the same electrical connections.

The LED module can thus be built less complex and more compact.

The present invention further relates to a method for operating an LED module based on ambient light sensing, comprising sensing light with at least one sensing LED, providing/transmitting of the sensed signal to a controlling unit and controlling the light emission of at least one emitting LED based on the sensed signal. The LED module has at least one LED and a control unit for driving the at least one LED, wherein the at least one LED comprises: the at least one emitting LED for emitting light, and the at least one sensing LED for sensing light and transferring a sensed signal to the control unit, wherein the at least one sensing LED is a blue LED, preferably a white LED comprising a blue LED and one or more color conversion material(s). A layer of color conversion material is applied to the at least one sensing LED, and the color conversion material is selected from a group of garnets, comprising a Ce3+ and/or Tb3+ doped YAG or a LuAG phosphor. The LED module comprises at least two LEDs, wherein at least one LED is the at least one emitting LED and at least one other LED is the at least one sensing LED, wherein the LED module further comprises shading means for shading the at least one sensing LED from the at least one emitting LED. The method comprises the step of: shading with said shading means such that less than 20%, more preferably less than 10%, most preferably less than 5% of the sensed signal detected by the at least one sensing LED are caused by light emission by the at least one emitting LED.

The method of the present invention provides the same advantages as described above for the LED module. The method of the present invention can be carried out by all embodiments of the LED module described above, and may include further steps corresponding to the advantageous implementations of the LED module.

Advantageously, the method comprises controlling the light output of the at least one emitting LED with a pulse width modulation, PWM, signal, and obtaining or evaluating the sensing signal from the at least one sensing LED only in off-periods of the PWM signal.

The present invention will now be described in more detail in relation to the attached drawings.
- Fig. 1: shows an LED module according to an embodiment of the present invention.
- Fig. 2: shows an LED module according to a further embodiment of the present invention including a color conversion material coated on the at least one sensing LED.
- Fig. 3: shows an LED module according to a further embodiment of the present invention including a color conversion coating shared by multiple LEDs.
- Fig. 4: shows an LED module according to a further embodiment of the present invention including a globe top shared by multiple LEDs.
- Fig. 5: shows an LED module according to a further embodiment of the present invention including shading means.
- Fig. 6: shows an LED module according to a further embodiment in which at least one LED may be used as emitting LED and sensing LED.
- Fig. 7: illustrates the use of a PWM signal to control the light output and to sense light in the off-periods of the PWM signal
- Fig. 8: shows the electrical response of different LED modules to light of different wavelengths.
- Fig. 9: shows the electrical response ratio of LED light to sunlight of a blue LED and a white LED, respectively.
- Fig. 10: shows the contribution of different color conversion materials to the electrical response ratio of LED light to sunlight of a white LED.

Specific embodiments of the present invention are described in the following. Embodiments can be combined with each other, where they do not contradict. Individual features characterizing one embodiment can also be implemented in another embodiment.

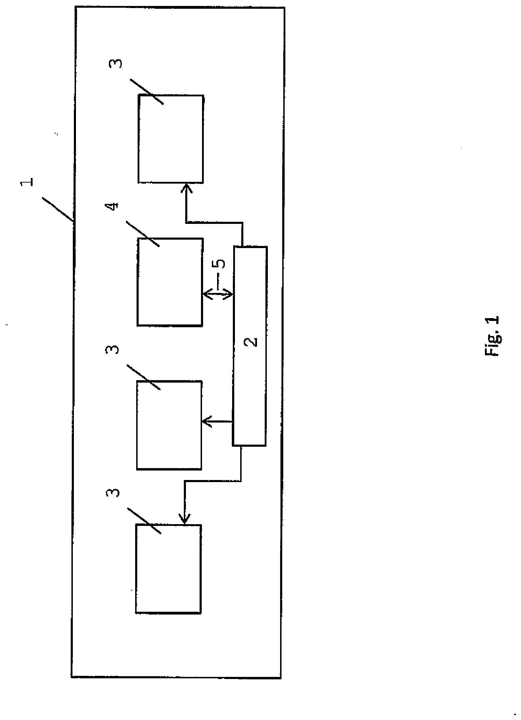

Fig. 1 schematically shows an LED module 1 of an embodiment of the present invention. The LED module 1 is operable based on (e.g. ambient) light sensing. In particular, the LED module 1 has at least one LED 3, 4, which can be dimmed based on the sensed light level. To this end, at least one LED of the LED module 1 is an emitting LED 3 for emitting light, and at least one LED is a sensing LED 4 for sensing light.

The LED module 1 shown exemplary in Fig. 1 comprises three emitting LEDs 3 emitting light (white or monochromatic light). These emitting LEDs 3 are preferably designed for emitting white light, i.e. are white LEDs. Preferably, the white LEDs comprising a blue-emitting LED die covered with a color conversion material (phosphor), for instance, a color conversion material emitting yellow, yellowish-green or green light. Further, the LED module 1 shown in Fig. 1 includes one sensing LED 4, but can also comprise more than one sensing LED 4. The at least one sensing LED 4 is configured to provide/transmit a sensed signal 5 according to the sensed light to a control unit 2.

The sensed signal 5 of the at least one sensing LED 4 can be obtained in different ways by the control unit 2. The sensed signal 5 can be a current measurement on the at least one sensing LED 4, having negative, positive or zero bias. Alternatively, a voltage at the at least one sensing LED 4 measured over a given resistive load can be taken as the sensed signal 5. Alternatively, a voltage change measurement performed on a defined regular bases/or in a certain time period can be used. Alternatively, a time measurement between two voltage levels obtained by charging a capacitance of the LED junction with a negative bias to a fixed voltage level, and then discharging of the capacitance, can be measured as the sensed signal 5.

The control unit 2 of the LED module 1 is for driving the at least one LED 3, 4, for instance by providing a driving current or a PWM signal. In particular, the control unit 2 is configured to receive a sensed signal 5 provided by the at least one sensing LED 4, and to control a light output/light emission intensity of the at least one emitting LED 3 based on the received and preferably evaluated sensed signal 5. In other words, the control unit 2 is configured to dim the one or more emitting LEDs 3 based on the intensity of sensed ambient light by the one or more sensing LEDs 4. For a higher intensity of sensed ambient light, the at least one emitting LED 3 is preferably dimmed to a lower light emission intensity. For a lower sensed intensity, the at least one emitting LED 3 is preferably dimmed to a higher light output (light emission intensity).

The inventors of the present invention have found that certain blue LEDs, especially blue LEDs covered with a particular class of color conversion materials (phosphors) can be arranged in such a way that their emission (i.e. the sum of the blue emission of the LED die and the yellow/greenish-yellow/green emission of the color conversion material(s)) does essentially not interfere with their sensing properties (i.e. their absorption spectrum), which is rather pronounced in the violet/near UV range.

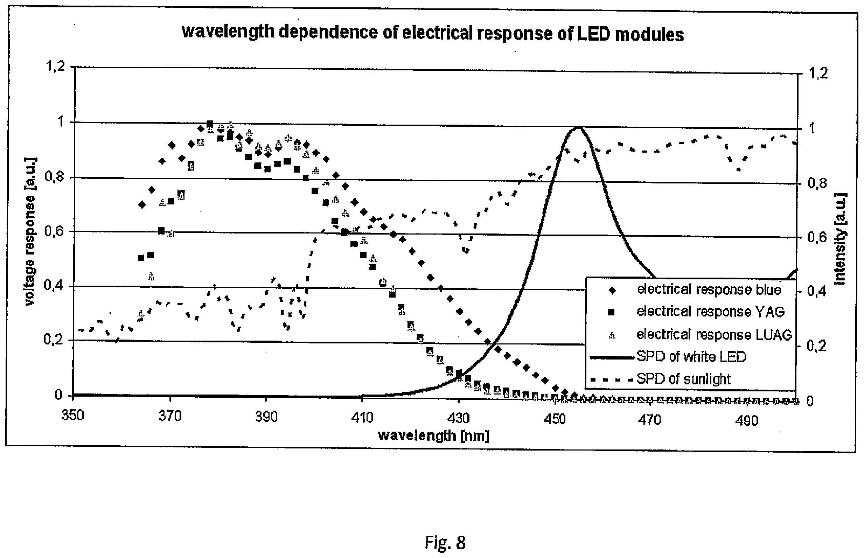

Fig. 8 shows in this respect a wavelength dependent electrical response of various LEDs. The electrical response (sensed signal) of blue LEDs is compared to the electrical response of blue LEDs covered by a coating layer of a color conversion material(s), especially in case of a YAG (yttrium aluminum garnet) and LuAG (lutetium aluminum garnet) coatings were studied. These absorption spectra are further compared with the emission spectrum of a white LED, and the emission spectrum of sunlight. It can be seen from Fig. 8 that blue LEDs selectively sense the light emitted by a white LED (or other light sources) and the sunlight. In other words, blue LEDs can be applied as photodiodes, which selectively sense in the lower wavelength ranges than their emission wavelength. However, the range of the spectrum, in which blue LEDs are selective, is present in sunlight (and also in light emitted by incandescent, halogen, HID, and fluorescent illumination sources), but not in the emission spectrum of white LEDs (or just a little portion of said two wavelength ranges overlap, where the white LEDs have a rather low emission intensity, which are typically used in lighting systems. UV/violet LEDs having a main emission peak, preferably in the range of 350-450nm, more preferably in the range of 370-390nm, could be used as photodiodes as well, preferably without any color conversion materials applied.

Moreover, it has been found that specific color conversion materials applied at a blue LED(s), i.e. phosphor coatings, further enhance this selective sensing function of blue LEDs.

The absorption (and/or excitation) spectra of these color conversion materials such as garnets e.g. YAG, LuAG, nitrides, or ortho-silicates (e.g. B.O.S.E. phosphors) are rel. narrow and match the blue emission spectra of a typical white LED (comprising a blue LED and a color conversion material). Thus, the content of blue light of the ambient light reaching the at least one sensing LED is further reduced (or filtered totally out) through its absorbtion and/or conversion into longer wavelengths by the phosphor applied to the sensing LED.

Basically, the sensing function is still realized by the blue LED die under the phosphor conversion, but the blue range of the spectrum of the ambient light is significantly decreased (almost eliminated) by the applied phosphor layer of the white LED arrangement. However, lower wavelengths (e.g. UV) could pass through the color conversion material and reach the sensing LED. The garnet color conversion materials were found to be to providing excellent results, especially YAG (Yttrium Aluminum Garnet, Y₃Al₅O₁₂: Ce³⁺) provides the best filtering function light output originated from the at least one white light emitting LED for ambient light sensing purposes.

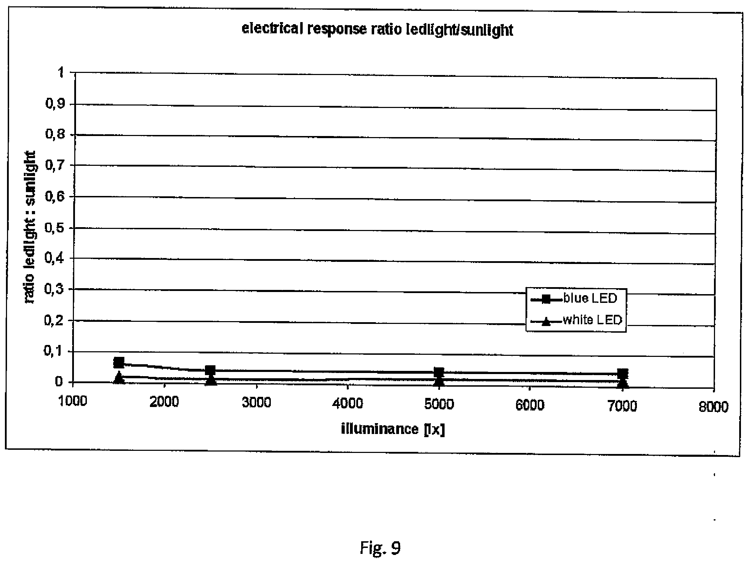

Fig. 9 shows in this respect an electrical response ratio of a blue LED and a white LED, respectively, wherein the electrical response ratio is defined by light emitted by a white LED to sunlight (white LED light/sunlight) in the range of 350-490nm of the spectrum. It can be seen that for blue LEDs the electrical response ratio is well below 0.1, and for white LEDs is even below 0.02. In other words, the electrical response of blue LEDs to sunlight is at least about 10 times higher than to LED light, while the electrical response of white LEDs to sunlight is even higher, about 50 times higher than the electrical response to LED light.

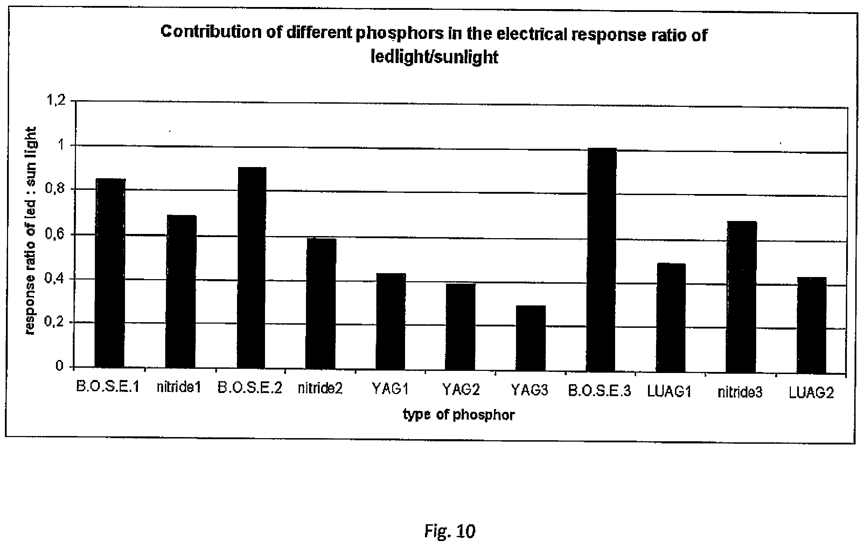

Fig. 10 shows further several suitable color conversion materials, which may increase the wavelength selectivity/sensing function of blue LEDs. Fig. 10 shows that garnets e.g. YAG, LuAG, nitrides, and ortho-silicates like B.O.S.E. phosphors are also suitable for achieving a high electrical response to sunlight like blue LEDs. They provide at least a similar selective sensing feature as blue LED, which represent a value of 1 (not shown) as a comparison basis. Especially, garnet phosphors provide excellent enhancing properties. The best results were found in case of YAG phosphors, but LuAGs provide also good applicability. Most preferably a YAG phosphor is used as a color conversion material and preferably covers the at least one sensing LED 4.

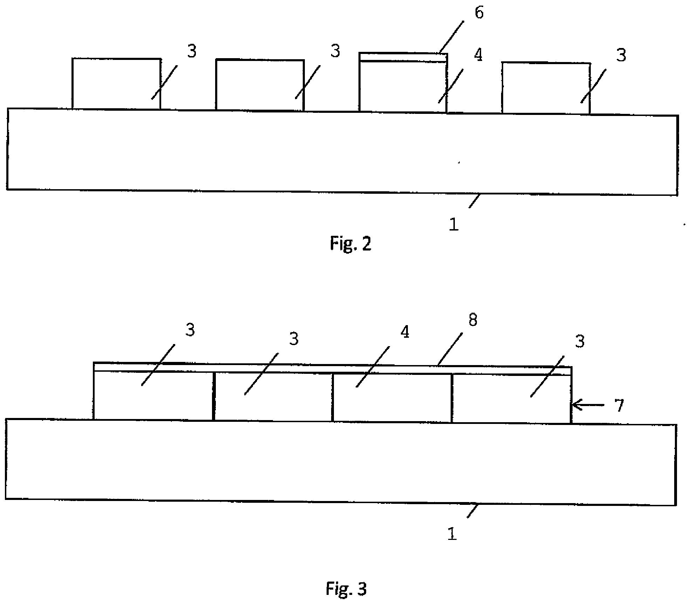

In view of the above findings of the present invention the at least one sensing LED 4 is preferably a blue LED, which is even more preferably covered with a layer 6 of color conversion material as shown in Fig. 2. Most preferably the layer 6 includes at least one of the color conversion materials shown in Fig. 10. The at least one sensing LED 4 can alternatively or additionally also be provided with a photosensitive element having a low pass filter (color filter) function, preferably with a threshold value at a wavelength in the range of 350-450 nm, more preferably at a wavelength of below 410 nm. In the exemplary embodiment of Fig. 2 only the sensing LED 4 is covered by a layer 6 of color conversion material. However, also the emitting LEDs 3 can be covered by the same layer 6 or a different layer of color conversion material.

Alternatively, in an embodiment of the present invention as shown exemplary in Fig. 3, the at least one emitting LED 3 and the at least one sensing LED 4 may be covered by a common layer 8 of color conversion material(s). Preferably, the at least one emitting LED 3 and the at least one sensing LED 4 can comprise a light emitting layer comprising the same semiconductor structure and/or compound 7. The LEDs 3, 4 can be mounted onto the substrate 1 being part from each other. Further the LEDs 3, 4 can be surrounded a reflective dam, which is filled with a common phosphor layer. Sensing blue LEDs 4 could be combined with blue and red LEDs 3 under the common phosphor layer 8. Additional red LEDs 3 could be applied to generate warm white light to avoid/reduce sensing difficulties instead of applying nitrides as a second red emitting phosphor mixed in the common phosphor layer 8 to adjust the warm white tone.

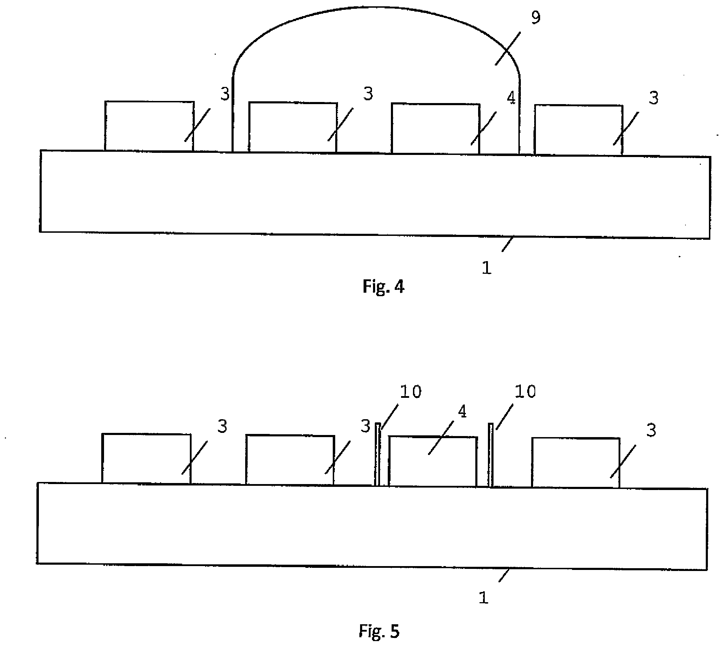

Fig. 4 shows exemplary another embodiment of the present invention, in which at least one emitting LED 3 and at least one sensing LED 4 are covered by a globe top 9. The globe top 9 can also cover all LEDs 3, 4 of the LED module 1. Also more than one globe top 9 can be provided on the LED module 1, for instance, covering at least one light emitting LED 3 and at least one sensing LED 4 each. The globe top 9 can include one or more optical elements like a lens, a diffuser, a deflector, a mirror, or can comprise a color conversion material(s)and/or scattering agents. The globe top 9 can be provided in addition to the layer 6 of color conversion material described above. The color conversion material(s) (phosphor(s)) of the globe top can be provided on the outer/inner surface of the globe top 9 as a (patterned) layer, or it can be provided dispersed in the material of the globe top 9. Such color conversion material is preferably disposed in light emission direction of the at least one light emitting LED 3.

Fig. 5 shows exemplary an embodiment of the present invention, wherein the LED module 1 further includes shading means 10, which shade the at least one sensing LED 4 from the at least one emitting LED 3. The shading means 10 prevents that the sensing signal 5 provided by the at least one sensing LED 4 is influenced by the at least one emitting LED 3, or at least reduces said influences.

In all embodiments of the present invention, by using a blue LED as the at least one sensing LED 4, preferably a white LED, which is combined more preferably with shading means 10, the sensing signal 5 output by the at least one sensing LED 4 can be kept relatively undisturbed by light coming from the at least one emitting LED 3. In particular, preferably less than 20%, more preferably less than 10%, most preferably less than 5% of the sensed signal 5 detected by the at least one sensing LED 4 are caused by light emission by the at least one emitting LED 3.

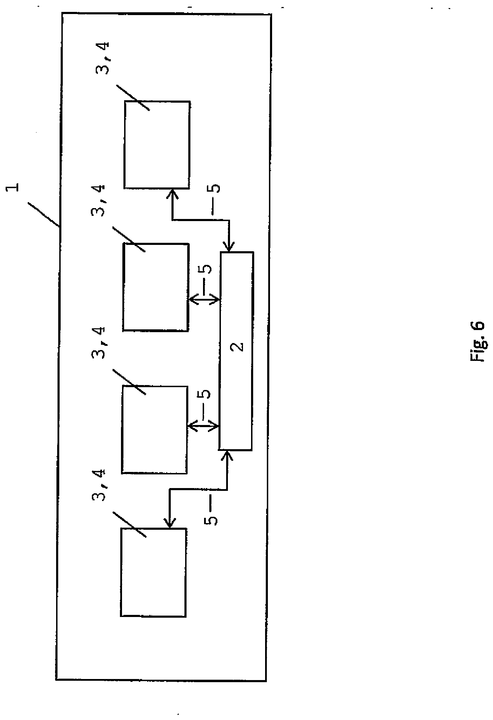

Fig. 6 shows an embodiment not covered by the claimed invention, wherein the LED module 1 includes at least one LED 3, 4, which functions as both the at least one sensing LED 4 and the at least one emitting LED 3. In its simplest configuration, said LED module 1 can comprise only one LED 3, 4, which can be operated as a light emitting LED 3 and as a sensing LED 4, for example in an alternating manner.

In this case the control unit 2 needs to operate the at least one LED 3, 4 as the emitting LED 3 in a first time period and as the at least one sensing LED 4 in a second time period. Preferably, the at least one LED 3, 4 is thereby driven with the same electrical connection for emitting and sensing light. In the exemplary embodiment of Fig. 6 four LEDs 3, 4 are contained in the LED module 1, wherein each LED 3, 4 is capable of emitting light by being operated by the control unit 2, and of sensing light and providing a sensed signal 5 to the control unit 2. The at least one LED 3, 4 is preferable a white LED. The control unit 2 carries out a multiplexing operation, in order to sense ambient light in the second time period, and to drive the LED 3, 4 in the first time period based on the sensed ambient light.

However, the LED module 1 according to the present invention may also comprise at least two LEDs 3 and 4. One of the LEDs 3 may be only used for sensing, and the other LED 4 may be used only for emitting light. In this case, the at least the one sensing LED 4 does emits light.

In all embodiments of the present invention, the at least one emitting LED 3 can also be driven by the control unit 2 with a PWM signal. By changing the amplitude or pulse width of the PWM signal, for instance by either changing the on-period or the off-period or both periods of the PWM signal, the light output of the at least one emitting LED 3 can be varied. The control unit 2 may further be configured to ensure that the sensing of ambient light by the at least one sensing LED 4 is only conducted during one or more off-periods of the PWM signal. This means that preferably the sensed signal of the ambient light 5 is sampled in a time period, which is equivalent to a typical PWM frequency. The typical PWM frequency is about 100 Hz or more. Thus, the off period of the at least one emitting LED 3 is preferably less than 100 ms, preferably less than 50 ms, more preferably less than 25 ms. The at least one sensing LED 4 can further be provided with discharge means for discharging the at least one sensing LED 4 before each off-period. In particular, such discharge means are of advantage in case of a high PWM frequency and increase the measurement accuracy.

In the context of the specification, claims and drawings, the term "PWM modulation" is used for one example of a pulsed operation of the LEDs, such that PWM in the above context has to be seen as also referring to other pulsed modulations, such as for example frequency modulation or pulse/pause modulation.

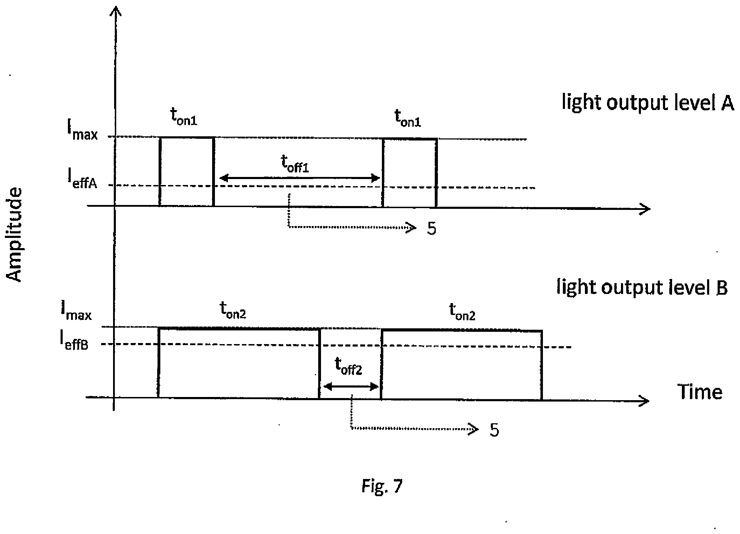

Fig. 7 shows the use of such a PWM signal for driving the at least one emitting LED 3. For a light output level A (a first dimming level), a first on-period tₒₙ₁ and a first off-period t_{off1} are set by the control unit 2 and are alternated. During the on-period, the maximum current Iₘₐₓ flows through the emitting LED 3. During the off-period no current flows through the at least one emitting LED 3. In average an effective current I_{effA} flows through the at least one emitting LED 3, and defines the first dimming level. In the lower part of fig. 7 a light output level B (a second dimming level) is shown. The on-period is now longer tₒₙ₂ and the off-period t_{off2} is shorter. Thus an effective current I_{effB} flows through the at least one emitting LED 3. In case of both dimming levels, during the off-periods t_{off1} and t_{off2}, respectively, the sensing signal 5 is obtained by the control unit 2 from the at least one sensing LED 4.

The control unit 2 is preferably configured to automatically determine the optimal point in time, at which the sensed signal 5 is obtained. Preferably, at the beginning of each off-period, the at least one sensing LED 4 is further discharged by the discharge means. After discharging the sensed signal 5 is obtained. Preferably, the sensed signal 5 may also be integrated over the whole off-period, in order to achieve a more precise measurement. In this case the discharge means discharges the at least one sensing means 4 preferably at the edge between each on-period and consecutive off-period.

In summary, the present invention utilizes at least one LED 4 on an LED module 1 as sensor, in order to dim the LED module 1. In particular a blue LED is used, preferably a blue LED covered with a color conversion material, which has a selective sensing feature sensitive to ambient light, but not to light emitted exclusively by the LED module 1, for instance the white LEDs of the LED module 1. Therefore, for example, a LED module 1 having multiple neighboring white LEDs 3, 4 can use at least one of the LEDs 3, 4 as a sensing LED 4 and at least one of the LEDs as an emitting LED 3, and can thus operate as ambient light sensing LED module 1 according to the present invention. If multiple of such LED modules 1 according to the present invention are implemented into a lighting system, each LED module 1 can be operated based on their individually sensed ambient light. Since in this case the ambient light is sensed directly on each LED module 1, the lighting system can carry out precise local ambient light measurements, and can consequently be operated more efficiently.

To further increase the efficiency of such a lighting system comprising multiple LED modules 1, a communication protocol can be established between different LED modules 1, in particular LED modules 1, which may influence each other's light emission intensity based on their sensed signals 5. The communication protocol may transmit, for example, the dimming status of the LED modules 1. The communication protocol may, for example, transmit information by flashing at least one emitting LED 3 of an LED module 1 in a simple digital coding (e.g. 8 bits plus a parity bit) in a simplex or duplex way, and sensing the flash by at least one sensing LED 4 of another module. Although the at least one sensing LED 4 is preferably fabricated to be influenced as little as possible by LED light, it may still recognize the flashing.

Different LED modules 1 may be synchronized to the same dimming level. Alternatively, dimming levels of different LED modules 1 can be superimposed or combined to a global dimming level depending, for example, on the locally measured ambient light levels. LED modules 1 can also be synchronized in terms of time periods, in which sensing of ambient light is carried out, and time periods, in which light is emitted, e.g. can be synchronized to common on-periods and off-periods of a PWM signal. Thus, interferences between ambient light sensing of one LED module 1 with light emission from another LED module can be avoided or reduced.

The invention can be used to sense natural ambient light, but also for sensing light from artificial illumination such as for example light stemming from neighboring LED modules, which can be used e.g. for a communication using visual light (Visual Lights Communication, VLC).

According to the invention, there is a plurality of options for sensing the natural and artificial ambient light as well as using visual lights communication with a LED module according to the invention having at least one sensing LED:
- the LED module according to the invention, i.e. having a sensing LED, maybe selectively operated in one or more of the following sensing modes:
- detection of natural ambient light,
- detection of ambient light stemming from artificial illumination means, e.g. in order to adapt the operation of the light emitting LEDs of the LED module according to (non signal-related) characteristics of other artificial illumination means,
- detection of signals communicated via a modulation of light (VLC), i.e. signal-related characteristics in sensed light of other artificial illumination means.

The sensing mode maybe selected by the control unit of the LED module according to the invention sensing and analyzing the light according to pre-defined criteria which have been pre-set to select artificial light, modulated artificial light and natural light.

The operation modes may be set by manually making a selection on a manual interface of the LED module, by inputting a command (e.g. via a bus interface) etc.

Sensing of artificial ambient light:
In this case the light originating from neighboring further artificial illumination means can be detected and analyzed. E.g. by analyzing the frequency and intensity fluctuations the LED module according to the invention can make a decision as to the lighting means and/or the operation mode (amplitude modulation, PWM modulation etc.) used by the neighboring artificial lighting means.

When sensing modulated artificial light, which is a special case of artificial ambient light, signals from neighboring luminaires or LED modules can be received. For example, neighboring luminaires or LED modules may thus transmit dimming signals, status information (presence detection, temperature information, aging information etc). Furthermore information for other building technology participants can be transmitted thus setting up a lighting network which can also used by none-lighting bus participants (sensors, actors etc.).

Such light modulation can also be used for the localization and position detection of luminaires or LED modules, which can in turn be used for example for the addressing of luminaires or LED modules.

The LED module according to the present invention may also sense the type of artificial illumination means, which can be for example a LED based monitor. The light emission operation of the LED module of the invention can then be adapted depending on this detection of the type of neighboring artificial illumination means.

E.g., by modifying the operation frequency of the LED module as a function of the detection of the type of neighboring artificial illumination means, can be used in order to reduce an interference with the neighboring illumination means and their display, for example in order to avoid cross talk or interference among the different light sources.

Depending on the detection of the neighboring light by the LED module according to the present invention any pulsed (PWM mode) operation of the light emitting LEDs can be used selectively and for example only in limited time periods. For example, an amplitude dimming system (i.e. a LED module in which the dimming of the light emitting LEDs is done using amplitude modulation) can be changed to a pulsed operation (e.g. using PWM) in order to use the sensing LED of the LED module according to the present invention in the off-period of the pulsed operation.

A manual or bus interface can be provided at the LED module such that a master or a user can select where the light emitting LEDs of the LED module according to the present invention shall be operated in a continuously pulsed mode or a pulsed mode only in limited time periods.

A detection of signals communicated via a modulation of light (VLC) may be performed by detection of signal-related characteristics in sensed light of other artificial illumination means. As already explained, a communication protocol can be established between different LED modules 1, in particular LED modules 1, to further increase the efficiency of such a lighting system. The multiple LED modules 1 may influence each other's light emission intensity based on their sensed signals 5. The communication protocol may transmit, as one example, the dimming status of the LED modules 1. The communication protocol may, for example, transmit information by flashing at least one emitting LED 3 of an LED module 1 in a simple digital coding (e.g. 8 bits plus a parity bit) in a simplex or duplex way, and sensing the flash by at least one sensing LED 4 of another module. The communication protocol may also transmit additional information necessary for the operation of the lighting system, e.g. information about a presence detection or movement detection, or service information (e.g. ageing or customer preferences) about the LED modules or the lighting system as well as other information not directly linked to the lighting system e.g. as a communication bus available for external devices like household devices or also computers or tablets but the communication by the visual light may be used for such information transport.

In the above specification the term "PWM modulation" is used for one example of a pulsed operation of the LEDs, such that PWM in the above context has to be seen as also referring to other pulsed modulations, such as for example frequency modulation or pulse/pause modulation.

## Claims

1. LED module (1) for operating based on light sensing, comprising
at least one LED (3, 4) and a control unit (2) for driving the at least one LED (3, 4),
the at least one LED (3, 4) comprising
• at least one emitting LED (3) for emitting light, and
• at least one sensing LED (4) for sensing light and transferring a sensed signal (5) to the control unit (2),
wherein the control unit (2) is configured to control the light output of the at least one emitting LED (3) based on the sensed signal (5) obtained by the at least one sensing LED (4),
**characterized in that** the at least one sensing LED (4) is a blue LED, namely a white LED comprising a blue LED and a layer of one or more color conversion material(s),
and the color conversion material is selected from a group of garnets, comprising a Ce³⁺ and/or Tb³⁺ doped YAG or a LuAG phosphor,
wherein the LED module (1) further comprises shading means (10) for shading the at least one sensing LED (4) from the at least one emitting LED (3),
wherein the shading means (10) is combined with the at least one sensing LED (4) such that less than 20%, more preferably less than 10%, most preferably less than 5% of the sensed signal (5) detected by the at least one sensing LED (4) is caused by light emission by the at least one emitting LED (3).

2. The LED module of claim 1,
wherein the sensed light is sensed ambient light that is natural and/or artificial light originating from a light source other than the LED module with the at least one sensing LED (4) itself.

3. The LED module according to claim 2,
wherein the sensed signal (5) is corresponding to the intensity of the ambient light.

4. LED module (1) according to claim 1, wherein
the blue LED has its main emission peak in the range of 410-460nm, preferably in the range of 430-460nm.

5. LED module (1) according any of the preceding claims, wherein the at least one sensing LED (4) provides a or, when being dependent on claim 4, the main emission peak at a lower wavelength than the at least one emitting LED (3).

6. LED module (1) according to one of the claims 1 to 5, wherein
the at least one emitting LED (3) and the at least one sensing LED (4) comprises a light emitting layer comprising the same semiconductor structure and/or semiconductor compound.

7. LED module (1) according to one of the claims 1 to 6, wherein
the at least one emitting LED (3) and the at least one sensing LED (4) are covered by a common color conversion layer (8) of the color conversion material (6) .

8. LED module (1) according to one of the claims 1 to 7, wherein
the control unit (2) is configured to turn off the at least one emitting LED (3) while obtaining the sensed signal (5) by the at least one sensing LED (4).

9. LED module (1) according to one of the claims 1 to 8, wherein
the control unit (2) is configured to control the light output of the at least one emitting LED (3) with a pulse width modulation, PWM, signal, and
to obtain or evaluate the sensed signal (5) obtained by the at least one sensing LED (4) only in an off-period of the PWM signal.

10. LED module (1) according to claim 9,
wherein the off-period of the at least one emitting LED (3) is less than 100 ms.

11. Method for operating an LED module (1) based on light sensing,
the LED module having at least one LED (3, 4) and a control unit (2) for driving the at least one LED (3, 4),
the at least one LED (3, 4) comprising
• at least one emitting LED (3) for emitting light, and
• at least one sensing LED (4) for sensing light and transferring a sensed signal (5) to the control unit (2),
• wherein the at least one sensing LED (4) is a blue LED, preferably a white LED comprising a blue LED and one or more color conversion material(s), wherein a layer of color conversion material (6) is applied to the at least one sensing LED (4), and the color conversion material is selected from a group of garnets, comprising a Ce³⁺ and/or Tb³⁺ doped YAG or a LuAG phosphor, and wherein the LED module (1) further comprises shading means (10) for shading the at least one sensing LED (4) from the at least one emitting LED (3),
the method comprising the steps of:
- sensing light with said at least one sensing LED (4) and transferring a sensed signal (5) corresponding to the intensity of the light to the control unit (2), and
- feedback-controlling the light output of said at least one emitting LED (3) using the sensed signal (5) as feedback signal,
the method being **characterized in that** it comprises the step of:
- shading with said shading means (10) such that less than 20%, more preferably less than 10%, most preferably less than 5% of the sensed signal (5) detected by the at least one sensing LED (4) are caused by light emission by the at least one emitting LED (3).

12. Method according to claim 11, further comprising feedback-controlling or dimming the light output of the at least one emitting LED (3) with a pulse width modulation, PWM, signal, and
obtaining and/or evaluating the sensed signal (5) by the at least one sensing LED (4) only in off-periods of the PWM signal.

## Patentansprüche

1. LED-Modul (1) zum Betreiben basierend auf Lichtsensorik, umfassend
zumindest eine LED (3, 4) und eine Steuereinheit (2) zum Ansteuern der zumindest einen LED (3, 4),
die zumindest eine LED (3, 4) umfassend
• zumindest eine emittierende LED (3) zum Emittieren von Licht, und
• zumindest eine erfassende LED (4) zum Erfassen von Licht und zum Übertragen eines erfassten Signals (5) an die Steuereinheit (2),
wobei die Steuereinheit (2) konfiguriert ist, die Lichtausgabe der zumindest einen emittierenden LED (3) basierend auf dem von der zumindest einen erfassenden LED (4) erhaltenen Ausgangssignal (5) zu steuern,
**dadurch gekennzeichnet, dass** die zumindest eine erfassende LED (4) eine blaue LED ist, nämlich eine weiße LED, die eine blaue LED und eine Schicht aus einem oder mehreren Farbkonversionsmaterial(ien) umfasst,
und das Farbkonversionsmaterial aus einer Gruppe von Granaten ausgewählt ist, umfassend einen Ce³⁺- und/oder Tb³⁺-dotierten YAG-oder einen LuAG-Phosphor,
wobei das LED-Modul (1) ferner Beschattungsmittel (10) zum Beschatten der zumindest einen erfassenden LED (4) von der zumindest einen emittierenden LED (3) umfasst,
wobei die Beschattungsmittel (10) mit der zumindest einen erfassenden LED (4) derart kombiniert ist, dass weniger als 20 %, bevorzugter weniger als 10 %, am meisten bevorzugt weniger als 5 % des von der zumindest einen erfassenden LED (4) erkannten erfassten Signals (5) durch Lichtemission von der zumindest einen emittierenden LED (3) verursacht wird.

2. LED-Modul nach Anspruch 1, wobei das erfasste Licht erfasstes Umgebungslicht ist, das natürliches und/oder künstliches Licht ist, das von einer anderen Lichtquelle als dem LED-Modul mit der zumindest einen erfassenden LED (4) selbst stammt.

3. LED-Modul nach Anspruch 2, wobei das erfasste Signal (5) der Intensität des Umgebungslichts entspricht.

4. LED-Modul (1) nach Anspruch 1, wobei die blaue LED ihre Hauptemissionsspitze im Bereich von 410-460 nm, vorzugsweise im Bereich von 430-460 nm, aufweist.

5. LED-Modul (1) nach einem der vorhergehenden Ansprüche, wobei die zumindest eine erfassende LED (4) eine oder, bei Abhängigkeit von Anspruch 4, die Hauptemissionsspitze bei einer niedrigeren Wellenlänge als die zumindest eine emittierende LED (3) bereitstellt.

6. LED-Modul (1) nach einem der Ansprüche 1 bis 5, wobei die zumindest eine emittierende LED (3) und die zumindest eine erfassende LED (4) eine lichtemittierende Schicht umfassen, welche die gleiche Halbleiterstruktur und/oder Halbleiterverbindung aufweist.

7. LED-Modul (1) nach einem der Ansprüche 1 bis 6, wobei die zumindest eine emittierende LED (3) und die zumindest eine erfassende LED (4) durch eine gemeinsame
Farbkonversionsschicht (8) des Farbkonversionsmaterials (6) bedeckt sind.

8. LED-Modul (1) nach einem der Ansprüche 1 bis 7, wobei die Steuereinheit (2) konfiguriert ist, die zumindest eine emittierende LED (3) abzuschalten, während das erfasste Signal (5) von der zumindest einen erfassenden LED (4) erhalten wird.

9. LED-Modul (1) nach einem der Ansprüche 1 bis 8, wobei die Steuereinheit (2) konfiguriert ist, die Lichtleistung der zumindest einen emittierenden LED (3) mit einem Pulsweitenmodulationssignal, PWM-Signal, zu steuern und das von der zumindest einen erfassenden LED (4) erhaltene erfasste Signal (5) nur in einer Aus-Periode des PWM-Signals zu erhalten oder auszuwerten.

10. LED-Modul (1) nach Anspruch 9, wobei die Aus-Periode der zumindest einen emittierenden LED (3) weniger als 100 ms beträgt.

11. Verfahren zum Betreiben eines LED-Moduls (1) basierend auf Lichtsensorik, wobei das LED-Modul zumindest eine LED (3, 4) und eine Steuereinheit (2) zum Ansteuern der zumindest einen LED (3, 4) aufweist, wobei die zumindest eine LED (3, 4) umfasst:
• zumindest eine emittierende LED (3) zum Emittieren von Licht, und
• zumindest eine erfassende LED (4) zum Erfassen von Licht und zum Übertragen eines erfassten Signals (5) an die Steuereinheit (2),
• wobei die zumindest eine erfassende LED (4) eine blaue LED ist, vorzugsweise eine weiße LED, die eine blaue LED und ein oder mehrere Farbkonversionsmaterial(ien) umfasst,
wobei eine Schicht des Farbkonversionsmaterials (6) auf die zumindest eine erfassende LED (4) aufgebracht ist, und das Farbkonversionsmaterial ausgewählt ist aus einer Gruppe von Granaten, umfassend einen Ce³⁺- und/oder Tb³⁺-dotierten YAG- oder einen LuAG-Phosphor, und
wobei das LED-Modul (1) ferner Beschattungsmittel (10) zum Beschatten der zumindest einen erfassenden LED (4) von der zumindest einen emittierenden LED (3) umfasst,
wobei das Verfahren die folgenden Schritte umfasst:
- Erfassen von Licht mit der zumindest einen erfassenden LED (4) und Übertragen eines erfassten Signals (5) entsprechend der Intensität des Lichts an die Steuereinheit (2), und
- Rückkopplungssteuerung der Lichtleistung der zumindest einen emittierenden LED (3) unter Verwendung des erfassten Signals (5) als Rückkopplungssignal,
wobei das Verfahren **dadurch gekennzeichnet ist, dass** es den folgenden Schritt umfasst:
- Beschattung mit Beschattungsmitteln (10), sodass weniger als 20 %, mehr bevorzugt weniger als 10 %, am meisten bevorzugt weniger als 5 % des von der zumindest einen erfassenden LED (4) erkannten erfassten Signals (5) durch Lichtemission der zumindest einen emittierenden LED (3) verursacht wird.

12. Verfahren nach Anspruch 11, ferner umfassend die Rückkopplungssteuerung oder Dimmung der Lichtleistung der zumindest einen emittierenden LED (3) mit einem Pulsweitenmodulationssignal, PWM-Signal, und das Erhalten und/oder Auswerten des erfassten Signals (5) durch die zumindest eine erfassende LED (4) nur in Aus-Perioden des PWM-Signals.

## Revendications

1. Module DEL (1) pour un fonctionnement basé sur la détection de lumière, comprenant
au moins une DEL (3, 4) et une unité de commande (2) pour exciter l'au moins une DEL (3, 4),
l'au moins une DEL (3, 4) comprenant
• au moins une DEL d'émission (3) pour émettre de la lumière, et
• au moins une DEL de détection (4) pour détecter la lumière et transférer un signal détecté (5) à l'unité de commande (2), dans lequel l'unité de commande (2) est configurée pour commander la sortie de lumière de l'au moins une DEL d'émission (3) sur la base du signal détecté (5) obtenu par l'au moins une DEL de détection (4),
**caractérisé en ce que** l'au moins une DEL de détection (4) est une DEL bleue, à savoir une DEL blanche comprenant une DEL bleue et une couche d'un ou plusieurs matériaux de conversion de couleur, et le matériau de conversion de couleur est choisi dans un groupe de grenats, comprenant un phosphore YAG dopé au Ce³⁺ et/ou au Tb³⁺ ou LuAG,
dans lequel le module de DEL (1) comprend en outre un moyen d'occultation (10) pour occulter l'au moins une DEL de détection (4) de l'au moins une DEL d'émission (3),
dans lequel le moyen d'occultation (10) est combiné avec l'au moins une DEL de détection (4) de telle sorte que moins de 20 %, de préférence moins de 10 %, de manière davantage préférée moins de 5 % du signal détecté (5) capté par l'au moins une DEL de détection (4) est provoqué par l'émission de lumière par l'au moins une DEL d'émission (3).

2. Le module DEL selon la revendication 1, dans lequel la lumière détectée est une lumière ambiante détectée qui est une lumière naturelle et/ou artificielle provenant d'une source de lumière autre que le module de DEL avec l'au moins une DEL de détection (4) elle-même.

3. Le module DEL selon la revendication 2, dans lequel le signal détecté (5) correspond à l'intensité de la lumière ambiante.

4. Le module DEL (1) selon la revendication 1, dans lequel la DEL bleue a son pic d'émission principal dans la plage de 410-460 nm, de préférence dans la plage de 430-460 nm.

5. Le module DEL (1) selon l'une quelconque des revendications précédentes, dans lequel l'au moins une DEL de détection (4) fournit un ou, lorsqu'il est dépendant de la revendication 4, le pic d'émission principal à une longueur d'onde inférieure à l'au moins une DEL d'émission (3).

6. Module de DEL (1) selon l'une des revendications 1 à 5, dans lequel l'au moins une DEL d'émission (3) et l'au moins une DEL de détection (4) comprennent une couche émettrice de lumière comprenant la même structure semi-conductrice et/ou le même composé semi-conducteur.

7. Module de DEL (1) selon l'une des revendications 1 à 6, dans lequel l'au moins une DEL d'émission (3) et l'au moins une DEL de détection (4) sont recouvertes par une couche de conversion de couleur commune (8) du matériau de conversion de couleur (6).

8. Module de DEL (1) selon l'une des revendications 1 à 7, dans lequel l'unité de commande (2) est configurée pour éteindre l'au moins une DEL d'émission (3) tout en obtenant le signal détecté (5) par l'au moins une DEL de détection (4).

9. Module de DEL (1) selon l'une des revendications 1 à 8, dans lequel l'unité de commande (2) est configurée pour commander la sortie de lumière de l'au moins une DEL d'émission (3) avec un signal de modulation de largeur d'impulsions, MLI, et pour obtenir ou évaluer le signal détecté (5) obtenu par l'au moins une DEL de détection (4) seulement dans une période d'arrêt du signal MLI.

10. Module de DEL (1) selon la revendication 9, dans lequel la période d'arrêt de l'au moins une DEL d'émission (3) est inférieure à 100 ms.

11. Procédé destiné à faire fonctionner un module DEL (1) basé sur la détection de lumière, le module DEL ayant au moins une DEL (3, 4) et une unité de commande (2) destiné à exciter l'au moins une DEL (3, 4), l'au moins une DEL (3, 4) comprenant
• au moins une DEL d'émission (3) pour émettre de la lumière, et
• au moins une DEL de détection (4) pour détecter la lumière et transférer un signal détecté (5) à l'unité de commande (2),
• dans lequel l'au moins une DEL de détection (4) est une DEL bleue, de préférence une DEL blanche comprenant une DEL bleue et un ou plusieurs matériaux de conversion de couleur,
dans lequel une couche de matériau de conversion de couleur (6) est appliquée à l'au moins une DEL de détection (4), et le matériau de conversion de couleur est choisi dans un groupe de grenats, comprenant un phosphore YAG dopé au Ce³⁺ et/ou au Tb³⁺ ou LuAG, et
dans lequel le module de DEL (1) comprend en outre un moyen d'occultation (10) pour occulter l'au moins une DEL de détection (4) de l'au moins une DEL d'émission (3),
le procédé comprenant les étapes de :
- détection de lumière avec ladite au moins une DEL de détection (4) et transfert d'un signal détecté (5) correspondant à l'intensité de la lumière à l'unité de commande (2), et
- commande par rétroaction de la sortie de lumière de ladite au moins une DEL d'émission (3) en utilisant le signal détecté (5) comme signal de rétroaction,
le procédé étant **caractérisé en ce qu'**il comprend l'étape de :
- occultation avec ledit moyen d'occultation (10) de telle sorte que moins de 20 %, de préférence moins de 10 %, de manière davantage préférée moins de 5 % du signal détecté (5) détecté par l'au moins une DEL de détection (4) sont provoqués par l'émission de lumière par l'au moins une DEL d'émission (3).

12. Procédé selon la revendication 11, comprenant en outre la commande par rétroaction ou l'atténuation de la sortie de lumière de l'au moins une DEL d'émission (3) avec un signal de modulation de largeur d'impulsions, MLI, et l'obtention et/ou l'évaluation du signal détecté (5) par l'au moins une DEL de détection (4) seulement dans des périodes d'arrêt du signal MLI.
